# EUROPÄISCHE PATENTSCHRIFT

(11) **EP 3 297 406 B1**
(45) Veröffentlichungstag und Bekanntmachung des Hinweises auf die Patenterteilung: **08.04.2020**
(21) Anmeldenummer: 17020415.0
(22) Anmeldetag: 08.09.2017
(51) Int. Cl.: H05B 37/03, H05B 39/10, B64F 1/18

(54) **VERFAHREN UND ANORDNUNG ZUM SCHUTZ VON PERSONEN VOR GEFÄHRLICHER BERÜHRSPANNUNG IN SERIENSTROMKREISEN MIT SERIENKREIS- UND LAMPENTRANSFORMATOREN**
METHOD AND ASSEMBLY FOR PROTECTING INDIVIDUALS FROM HAZARDOUS CONTACT VOLTAGE IN SERIES CIRCUITS WITH SERIES CIRCUIT AND LAMP TRANSFORMERS
PROCÉDÉ ET AGENCEMENT DE PROTECTION DE PERSONNES CONTRE LA TENSION DE CONTACT DANGEREUSE DES CIRCUITS EN SÉRIE DOTÉS DE TRANSFORMATEURS DE CIRCUIT EN SÉRIE ET DE TRANSFORMATEURS DE LAMPE

(30) Priorität: 16.09.2016 DE 102016011115
(43) Veröffentlichungstag der Anmeldung: 21.03.2018
(73) Patentinhaber: Systemtechnik LEBER GmbH & Co.KG, 90571 Schwaig (DE)
(72) Erfinder: Leber, Dieter, 91207 Lauf (DE)
(74) Vertreter: Dreykorn-Lindner, Werner

(56) Entgegenhaltungen:
- WO-A1-91/04647
- JP-A- H11 185 978

## Beschreibung

Die Erfindung betrifft, gemäß dem Oberbegriff des Patentanspruchs 1, eine Anordnung zum Schutz von Bedienpersonal vor gefährlicher Berührspannung in einem Serienstromkreis, wobei der Serienstromkreis einen zentral angeordneten Konstantstromregler und mehrere jeweils auf ihrer Primärseite durch Serienkabel in Reihe geschaltete Lampentransformatoren aufweist, wobei der Konstantstromregler einen Serienkreistransformator aufweist, an dessen Sekundärseite die Lampentransformatoren angeschlossen sind, und wobei auf der jeweiligen Sekundärseite jedes Lampentransformators ein Leuchtmittel angeschlossen ist, wobei die Anordnung aufweist:
a) eine oder mehrere Schutzschaltungen, welche je zwischen der Sekundärseite eines Lampentransformators und dem zugehörigen Leuchtmittel angeschlossen sind, wobei jede Schutzschaltung einen schließ- und öffenbaren elektrischen Kontakt zur Überbrückung des Lampentransformators durch Kurzschließen aufweist.

Weiterhin betrifft, gemäß dem Oberbegriff des Patentanspruchs 1, die Erfindung ein Verfahren zum Schutz von Bedienpersonal vor gefährlicher Berührspannung mittels einer Anordnung gemäß Patentanspruch 1 in einem Serienstromkreis gemäß Patentanspruch 1.

Auf dem technischen Gebiet der Beleuchtungstechnik sind unterschiedlich ausgestaltete Schutzeinrichtungen für Lampen und Personen seit langem bekannt. Insbesondere betrifft die vorliegende Erfindung eine Einrichtung nebst einem Verfahren, das als Schutzeinrichtung für Personen dient, welche mit Arbeiten in elektrischen Einrichtungen von Serienstromkreisen, wie sie unter anderem in der Flugfeldbefeuerung und in der Straßenbeleuchtung vorkommen, beschäftigt sind. Befeuerungsanlagen bei Flugplätzen dienen dazu, Flugzeuge beim Start, bei der Landung und beim Rollen der Flugzeuge auf dem Flugplatz zu leiten, vor allem bei Nacht und schlechter Sicht. Dies sind Befeuerungselemente, wie die Markierungen der Start- und Landebahnen, die Anflugbefeuerung, Gleitwinkelfeuer, Schwellenfeuer, Start- und Landbahnleuchten, Taxiway Feuer, Kennfeuer, Gefahrenfeuer, Hindernisfeuer und die Markierungen und Wegweiser der Vorfelder und Rollbahnen. Bei großen Flugplätzen erstrecken sich solche Befeuerungsanlagen über mehrere Kilometer, so dass entsprechend ausgedehnte Kabelnetze erforderlich sind. Um trotz der kilometerlangen Leitungen nicht mit störenden Leistungsabfällen konfrontiert zu sein, werden meist Serienkreise verwendet, wobei die Speisung der Leuchtmittel mittels Lampentransformatoren vom Serienkabel entkoppelt wird, um beim Ausfall eines Leuchtmittels den Serienkreis nicht zu unterbrechen. Weiterhin erfolgt die Speisung des Serienkabels gemeinsam zentral gesteuert mittels Konstantstromregler, so dass Lichtsignale mit schwankender Helligkeit insbesondere durch Ausfall von Leuchtmitteln vermieden werden.

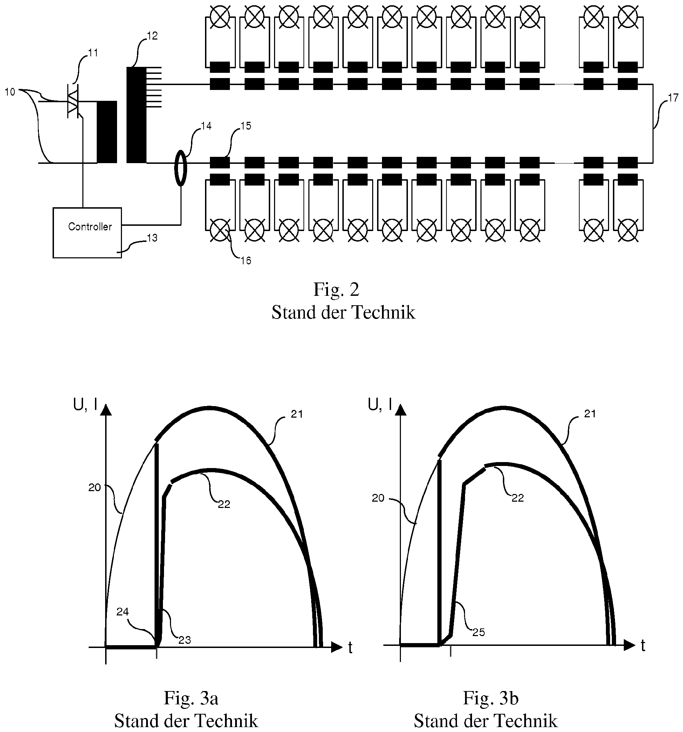

Eine konventionelle Serienstromapplikation nach FIG. 2 besteht im Wesentlichen aus einer Versorgung 10 mit typischerweise 230VAC oder 400VAC, einem Stellglied 11 damit der Serienkreistransformator 12 im Phasenanschnitt gefahren werden kann. Weiterhin ist eine Steuereinheit 13 mit einer zugehörigen Messeinrichtung 14 vorgesehen, welche den sekundären Strom des Serienkreistransformators 12 effektiv erfasst und mit einem Sollwert vergleicht. Ein mit der Steuereinheit 13 in Verbindung stehendes Stellglied 11 wird so gesteuert, dass die Reihenschaltung von primärseitig mittels eines einadrigen Kabels 17 verbundenen Lampentransformatoren 15 und den Leuchtmitteln 16, welche jeweils an einen sekundären Abgang eines jeden Lampentransformators 15 angeschlossen sind, mit einem Stromwert laut der Sollwertvorgabe betrieben werden. Die Lampentransformatoren 15 haben typischerweise ein Übersetzungsverhältnis von 1:1.

Somit wird sichergestellt, dass durch alle Lampentransformatoren 15 primärseitig der gleiche Strom fließt. Weil jetzt alle Lampentransformatoren 15 typischerweise das gleiche Übersetzungsverhältnis von 1:1 haben, fließt auch auf der Sekundärseite der Lampentransformatoren 15 und damit auch durch die angeschlossenen Leuchtmittel 16 der gleiche Strom wie im Serienkabel 17.

Die Anordnung von Leuchtmitteln 16 in Verbindung mit jeweils einem Lampentransformator 15 hat den Vorteil, dass ein Leuchtmittel 16 ausfallen darf, ohne dass der Stromkreis unterbrochen wird. Am Beispiel eines Serienkreises mit 6,6A Nennstrom und 200 Stück Leuchtmittel mit je 100W erklärt sich das Wirkprinzip der Lampentransformatoren 15 wie folgt:
- 100W an 6,6A AC ergeben rund 15VAC Nennspannung am Leuchtmittel 16. Der Lampentransformatoren 15 reflektiert diese Spannung auf die Primärseite.
- Für den zentral angeordneten Serienkreistransformator 12 sieht das aus wie eine Reihenschaltung von 200 Stück Verbrauchern mit jeweils 15VAC.
- Insgesamt muss die Anordnung nach FIG. 2 eine maximale Treibspannung von 3000VAC am Serienkreistransformator 12 bereitstellen. Als Reserve und für Spannungsschwankungen etc. kommen noch mal 20% dazu, so dass sich letztendlich ein Abgriff bei 3600VAC am Serienkreistransformator 12 empfiehlt.
- Im Betrieb stellt sich nun eine Situation wie in FIG. 3a beschrieben ein. Die Steuereinheit 13 entscheidet sich dafür, die Halbwellen 20 am Punkt 24 zu zünden. Damit liegt ab diesem Zeitpunkt die Spannung 21 am Lastkreis an und es stellt sich ein Strom 22 ein. Die leichte Abweichung von Spannungsverlauf zu Stromverlauf ab dem Zündzeitpunkt 24 erklärt sich durch die Induktivitäten aller beteiligten Komponenten des Lastkreises einschließlich der Kabelinduktivität.
- Sobald ein Leuchtmittel 16 ausfällt, fließt auf der Sekundärseite des Lampentransformators 15 kein bzw. nahezu kein Strom mehr. Somit würde auf der Primärseite des Lampentransformators 15 ebenfalls kein Strom mehr fließen. Dieser Lampentransformator 15 möchte jetzt als einziger in der Reihenschaltung den Stromfluss blockieren. Dies kann er aber nur bis ca. doppeltem Wert seiner Nennspannung (ca. 30V bei einem 100W Trafo). Ab da geht er in Sättigung. In der Sättigung kann der Strom dann wieder voll fließen. Lampentransformatoren sind für diesen, nach Norm DIN EN 61823 (Elektrische Anlagen für Beleuchtung und Befeuerung von Flugplätzen - AGL-Serienkreistransformatoren (AGLST) - diese Norm legt die Merkmale von Serienkreistransformatoren fest, die in der Flughafen-Bodenbefeuerung verwendet werden, insbesondere von Luftfahrtbodenfeuern mit 6,6A
- Serienstromkreisen bei einer Betriebsspannung bis zu 5 kV und gespeist von Konstantstromreglern bis zu 30 kVA Nennleistung) zulässigen Einsatzfall mit kurzen hohen Spannungsspitzen gebaut und können somit dauernd in Betrieb bleiben.
- Dieser Sättigungsvorgang dauert Bruchteile von Millisekunden und führt zu einem verspäteten Einsetzen des Stromflusses. Die Steuereinheit 13 erkennt die Abweichung des effektiven Stroms und regelt den Zündzeitpunkt und damit den Stromfluss 25 weiter nach vorne wie in Fig. 3b gezeigt.

Somit wird sichergestellt, dass ein Ausfall eines oder mehrerer Leuchtmittel 16 nicht zum Ausfall eines ganzen Serienstromkreises führt.

Speziell in Anwendungen auf Flughäfen wird diese technische Eigenheit zusätzlich dafür genutzt, die Anzahl der ausgefallenen Lampen während des laufenden Betriebs zu erfassen. Auf dem Flugfeld kann niemand mal schnell durch den rollenden Verkehr der Flugzeuge fahren und die Lampen kontrollieren.

Eines der bekannten Messprinzipien für ausgefallene Leuchtmittel 16 arbeitet wie folgt:
- Die Messeinrichtung ist im zentralen Serienstromkreisregler integriert und überwacht den gesamten von ihm versorgten Serienkreis.
- Zum Zeitpunkt der Zündens wird während des Stromanstieges zum einen das Spannungsintegral ∫*Udt* der Spannung 21 als auch das Stromintegral ∫*Idt* des Stroms 22 gebildet.
- Nach der Formel *L* ≈ ∫*Udt* / ∫*Idt* kann jetzt auf die Induktivität erfasst und auf die ausgefallenen Leuchtmittel 16 geschlossen werden.
   Um die Grundinduktivität des Kreises zu ermitteln, wird ein Kreis bei seiner Inbetriebnahme einmalig kalibriert.
- Das Bedienpersonal des Flughafens weiß damit sehr genau, wie viele Leuchtmittel 16 in einem Kreis ausgefallen sind und wann Servicearbeiten eingeleitet werden müssen.

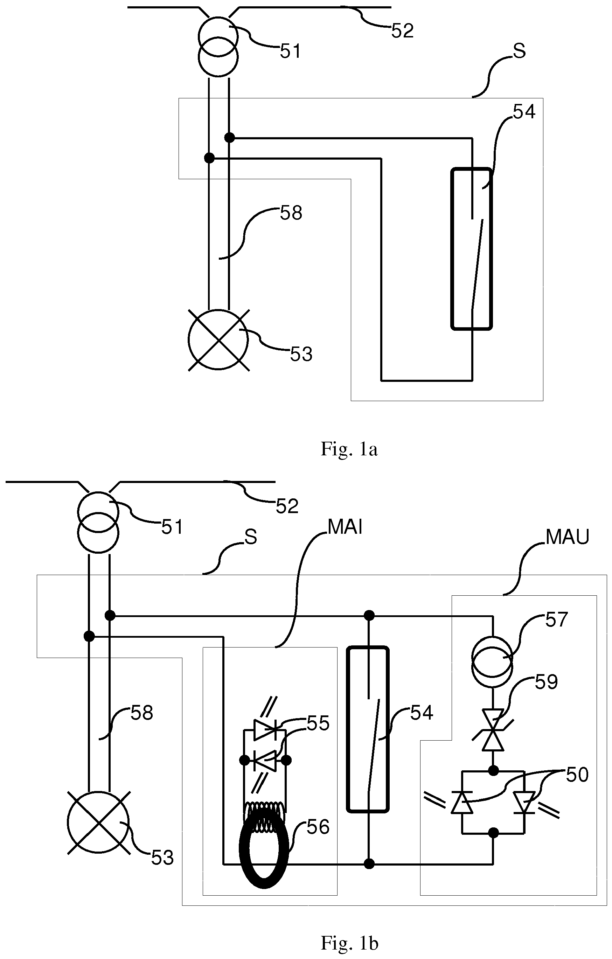

Dieses Verfahren sagt nur etwas aus über die Anzahl der Leuchtmittel 16 jedoch nicht über deren Position. Für eine Reparatur muss das Personal nun den entsprechenden Abschnitt für die Flugzeuge sperren, den Kreis einschalten und das oder die defekten Leuchtmittel 16 suchen. Wenn gefunden, wird das Leuchtmittel 16 dann gleich unter Spannung gewechselt. Weiterhin gibt es bei seriell getriebenen leerlaufenden Lampentransformators 15 den unschönen Effekt, dass bei jeder Halbwelle, vom Zündzeitpunkt 24 an beginnend, so lange bis die Sättigung einsetzt, die Sekundärseite für diese Zeitspanne mit hohen Spannungsspitzen reagiert. Diese Spitzen überschreiten nicht selten sogar 1000Vpeak. Für das Kabel 17, die Lampentransformatoren 15 und die Feuer/ Leuchtmittel 16 kein Problem, weil sie dafür gebaut und dauernd geeignet sind. Kritisch wird es jetzt für das Personal. Es muss das Leuchtmittel 16 ersetzen. Dabei bestehen vielerlei Möglichkeiten einer direkten Berührung mit einer oder beiden Leitungen der Zuleitung (FIG. 1, 58; FIG. 4, 38; FIG. 5, 48) für das Leuchtmittel 16. Speziell wenn der Gaskolben geplatzt ist, ist die Gefahr von unbeabsichtigtem Berühren sehr hoch.

Die verschiedenen Flughäfen haben für dieses Problem der Wartung unter Spannung bisher jeweils verschiedene Lösungsansätze und Vorgehensweisen erarbeitet, da bei Wartungsarbeiten an der Flughafenbefeuerung in den betreffenden Abschnitten nicht einfach der spannungsfreie Zustand hergestellt werden kann (das defekte Leuchtmittel würde sich nicht offenbaren). Das reicht von Arbeiten mit Schutzanzug, Arbeiten mit Schutzhandschuhen, Arbeiten auf einer speziellen Isolationsunterlage (beispielsweise eine Isolierwanne), Arbeiten nur mit einer Hand, Arbeiten nur zu zweit etc.. Die Situation ändert sich nun durch die DIN EN 62870 (Elektrische Anlagen für Beleuchtung und Befeuerung von Flugplätzen - Sicherheitssekundärkreise in Serienstromkreisen) vom 25.07.2016 grundlegend. Diese Norm schreibt vor, dass an den Klemmen der Leuchtmittel 16 nur noch eine sichere Spannung SELV (Safety Extra Low Voltage) bis 50VAC zulässig ist. Die benutzten Lampentransformatoren 15 sind zwar so gebaut, dass ein Kurzschluss zwischen Primärwicklung und Sekundärwicklung nicht möglich ist, indem beispielsweise die Wicklungen über- oder nebeneinander in getrennten Isolierstoffkammern untergebracht werden. Ein Schutz gegen kurze hohe Spannungsspitzen ist jedoch nicht gegeben. Die Flughäfen möchten jetzt ihre Bestandsanlagen nachrüsten.

Es gibt auf dem technischen Gebiet der Beleuchtungstechnik mit Serienstromkreisen Lösungsansätze, welche die Forderung nach SELV erfüllen. Ein Beispiel in der Flugfeldbefeuerung mit Serienstromkreisen sind Schmelzsicherungen (auch ANTI-FUSES oder Cutout genannt), welche zur Realisierung eines Überbrückungspfads des Leuchtmittels eingesetzt werden. Diese Schmelzsicherung wurde in die Zuleitung zum Leuchtmittel zwischen die beiden Leitungen gebaut. Sobald die Spannung für das Leuchtmittel über ca. 100V angestiegen ist, was ja nur bei einem Leuchtmittelausfall geschehen konnte, ist in der Kapsel eine Substanz auf Grund elektrochemischer Reaktionen geschmolzen und hat dadurch den Lampentransformator sekundärseitig permanent kurzgeschlossen. Der Kurzschluss war irreversibel. Die Kapsel musste ersetzt werden. Diese Technik ist seit langem auf dem Gebiet der Straßenbeleuchtung bekannt, beispielsweise aus dem Patent US 717,201 vom 30.12.1902 oder dem Patent US 1,121,997 vom 22.12.1914 oder dem Patent US 1,752,258 vom 25.03.1930.

Ein ähnliches Cutout-System ist von der Anmelderin bekannt. Dieses Produkt wird ebenfalls in die Zuleitung zum Leuchtmittel zwischen die Leitungen geklemmt und überwacht im Normalfall permanent die aktuelle Betriebsspannung des Leuchtmittels. Bei intakter Lampe verhält sich der Lampentransformator wie ein normaler Übertrager. Bei ausgefallenem Leuchtmittel verhält sich der Lampentransformator wie eine Speicherdrossel, welche in Sättigung gefahren wird. Wenn mehrere Leuchtmittel eines Serienstromkreises ausfallen, addieren sich die Induktivitäten aller ,leer' laufenden Trafos zu einer großen Gesamtinduktivität. Einige Leuchtmittelausfälle kann der Konstantstromregler normalerweise durch Ändern des Zündwinkels kompensieren. Bei vielen Lampenausfällen jedoch kommt der Serienstromkreis-Regler an seine dynamischen Grenzen und kann den gewünschten Strom nicht mehr bereitstellen. Dadurch werden alle restlichen Lampen dann dunkler. Beim Cutout-System der Anmelderin wird - sobald die Spannung für das Leuchtmittel über ca. 100V ansteigt, was ja nur bei einem Leuchtmittelausfall geschehen kann - der Lampentransformator sekundärseitig mittels eines Relais kurzgeschlossen. Das Relais verbleibt permanent in diesem geschlossenen Zustand. Dies erleichtert den Einschaltvorgang von Kreisen mit defekten Leuchtmitteln - besonders dann, wenn in einem Kreis viele defekte Leuchtmittel enthalten sind. Wenn das Personal das jeweilige Leuchtmittel vor Ort getauscht hat, kann es die Selbsthaltung wieder lösen. Beispielsweise kann ein kurzgeschlossener Cutout mittels eines speziellen magnetischen Stabes wieder geöffnet werden.

Beide Einrichtungen hatten den Vorteil, dass an einem leerlaufenden Lampentransformator niemals hohe Spannungsspitzen auftreten konnten bzw. sofort dauerhaft eliminiert wurden und so keine Personen geschädigt werden konnten, jedoch den Nachteil, dass ein defektes Leuchtmittel nicht automatisch durch zentrale Messung im Stromregler erkannt werden kann. Jede Nacht mussten alle Lampen durch Personal kontrolliert werden. Diese Lösungen werden von den Flughäfen zukünftig nicht mehr akzeptiert.

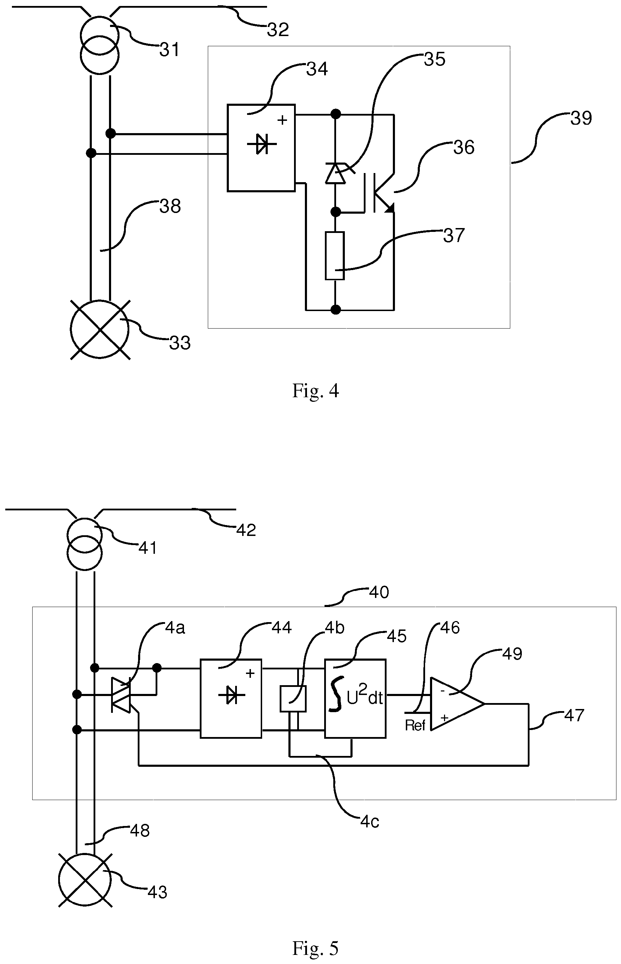

Es sind für die Anmelderin zwei Möglichkeiten denkbar, das Problem der hohen Spannungsspitzen mit elektronischem Aufwand zu lösen:
Die erste Möglichkeit beruht auf dem Prinzip einer Spannungsbegrenzung durch selektive Belastung und wird nachfolgend anhand FIG. 4 näher beschrieben und erläutert. Das serielle Kabel 32, der Lampentransformator 31, die Zuleitung 38 und das Leuchtmittel 33 sind Teil einer bestehenden Installation. Zusätzlich wird nun ein Begrenzer 39 zwischen die Zuleitung 38 montiert. Die Nennspannung für das Leuchtmittel 33 (typischerweise kleiner als 25VAC) wird mit einem mit beiden Adern der Zuleitung 38 verbunden Gleichrichter 34 gleichgerichtet und die beiden Ausgänge des Gleichrichters 34 sind auf einen Transistor 36 geführt.

Sobald die Zenerspannung einer zwischen Plus-Ausgang des Gleichrichters 34 und Basis des Transistors 36 liegenden Diode 35 mit typischem 100V überschritten wird, belastet mit einem Gate-Emitter-Widerstand 37, öffnet der Transistor 36 im Analogbetrieb und hält die Spannung auf ca. 100V fest. Da die Zeitdauer eines solchen Peaks/sehr hohe Spannungsspitze in der Regel nicht länger als 1msec ist, ergibt sich daraus, dass der resultierende Effektivwert der Spannung mathematisch 31Veff ist und somit sicher unter dem Limit/Schwellenspannung von 50VAC liegt Selbst wenn sich der Impuls auf 2msec ausdehnt, wäre mit 45Veff die Grenze von 50V noch nicht erreicht.

Nachteil des vorstehend beschriebenen Systems mit einer Spannungsbegrenzung durch Belastung ist die hohe Verlustleistung. Wenn der Transistor 36 in den Analogbetrieb wechselt, fließen je nach Typ des Lampentransformators 31 doch noch nennenswerte Ströme. Bei z.B. 1 A für 2msec und 100V begrenzter Spannung entstehen am Transistor 36 Verlustleistungen von 44W. Der technische Aufwand, diese Wärme abzuführen, ist groß.

Des Weiteren beeinflusst diese Lösung eine automatische Lampenausfallerkennung. Ein Lampenausfallsystem kann nur dann defekte Lampen erkennen, wenn diese nicht überbrückt sind. Nur dann bildet der dazugehörige Lampentransformator 31 seine Induktivität voll aus. Eine Belastung nach dem eben beschriebenen Verfahren eliminiert zwar die hohen Spannungsspitzen, arbeitet aber dem Grunde nach nicht statisch sondern dynamisch. Wenn z.B. mehrere Leuchtmittel ausgefallen sind, wird jedes Leuchtmittel durch die Schutzschaltung anders belastet als wenn nur eines ausgefallen wäre. Es steht sogar zu befürchten, dass die Induktivität durch diese dynamische Belastung insgesamt in etwa konstant bleiben wird, weil sich bei mehreren Leuchtmittelausfällen die entstehenden Spannungsspitzen aufteilen und insgesamt wieder so groß sind wie ein einzelnes Leuchtmittel. Damit lässt sich aber keine automatische Ausfallerkennung mehr betreiben.

Die zweite Möglichkeit beruht auf dem Prinzip einer Spannungsbegrenzung durch selektives Kurzschließen und wird nachfolgend anhand FIG. 5 näher beschrieben und erläutert. Das serielle Kabel 42, der Lampentransformator 41, die Zuleitung 48 und das Leuchtmittel 43 sind Teil einer bestehenden Installation. Zusätzlich wird nun ein Begrenzer 40 in die Zuleitung 48 montiert. Die Nennspannung für das Leuchtmittel 43 (typischerweise kleiner als 25VAC) wird im Begrenzer 40 mit einem Gleichrichter 44 gleichgerichtet, an dessen Ausgängen ein Integrator 45 angeschlossen ist, welcher die Ausgangsspannung als Quadrat der Momentanwerte einer jeden Halbwelle aufaddiert. Der Ausgang des Integrators 45 ist mit einem Komparator 49 verbunden. Sobald der Integrator 45 einen festen Wert/Referenzwert 46, welcher den Effektivwert für 50 Veff repräsentiert, überschreitet, zündet der Komparator 49 einen Schalter 4a und schließt damit den sekundären Kreis des Lampentransformators 41 für den Rest der Halbwelle kurz. Dieser Vorgang wiederholt sich in jeder Halbwelle. Zu Beginn jeder Halbwelle, überwacht durch eine Nullpunkt Erkennungseinrichtung 4b, wird der Integrator 45 gelöscht (Leitung 4c).

Der Nachteil dieser Lösung ist, dass die Schwelle für 50Veff je nach Höhe der Spannungsspitzen verschieden schnell erreicht wird und sie damit die automatische Lampenausfallerkennung ebenfalls erheblich verfälscht weil sich wiederum die Induktivität des Lampentransformators 41 nicht oder nicht voll ausbilden kann.

Somit beeinflussen beide Möglichkeiten die automatische Lampenausfallerkennung.

Ein Verfahren und eine Vorrichtung zur Lampenausfallmeldung und zur Konstanthaltung des Serienstromkreises von Befeuerungsanlagen auf Flugplätzen oder dgl. ist aus der DE 197 50 560 A1 bekannt. Als Verbraucherkreis mit in Serie geschalteten Lampentransformatoren zur Versorgung der Lampen dient ein sekundärseitiger Serienkreis eines Speisetransformators, der mittels einer eine übergeordnete Steuerung aufweisenden Konstantstromregelung geregelt wird. Der Ist-Strom im sekundärseitigen Serienkreis und die Ist-Spannung auf der Primärseite des Speisetransformators des sekundärseitigen Serienkreises werden gemessen und es wird jeweils ein entsprechendes Messsignal der übergeordneten Steuerung zugeführt. In der übergeordneten Steuerung wird aus einem dem Ist-Strom im sekundärseitigen Serienkreis entsprechenden Messsignal und einem der Ist-Spannung auf der Primärseite des Speisetransformators entsprechenden Messsignal ein der Induktivität des sekundärseitigen Serienkreises entsprechender Wert ermittelt. Weiterhin wird der für die Induktivität des sekundärseitigen Serienkreises ermittelte Wert mit in der übergeordneten Steuerung abgespeicherten Vergleichswerten für die Induktivität des sekundärseitigen Serienkreises verglichen, die bei vollständig intaktem und in Betrieb befindlichem sekundärseitigen Serienkreis und bei Abschaltung einer und/oder mehrerer Lampen des sekundärseitigen Serienkreises ermittelt worden sind. Bei dieser Ausführungsform übernimmt die übergeordnete Steuerung der Konstantstromregelung zusätzlich die Mess- und Auswerteaufgaben einer Lampenausfallüberwachung mit. Im Betrieb der Konstantstromregelung bzw. des Serienkreises kann dann der während dieses Betriebs ermittelten Induktivität ein aus den für jede Stromstufe errechneten zumindest drei Vergleichs-Induktivitätswerten durch lineare Inter- und Extrapolation ein ganzzahliger Lampenausfallwert zugeordnet werden. Weiterhin können bei Vor-Ort-Betrieb mittels dezentraler Reglereinrichtung (d.h. Einzellampensteuerung) die Lampen der Befeuerungsanlage bzw. der zentral angeordnete Speisetransformator, dessen Sekundärseite einen Überspannungs- oder Blitzschutz aufweist, ein- und ausgeschaltet werden.

Weiterhin sind Einzellampensteuerung für Befeuerungsanlagen auf Flugplätzen u. dgl. bekannt. Beispielsweise ist aus der DE 101 44 929 A1 eine Einzellampensteuerung mit Einzellampensteuermodule bekannt, welche jeweils den Betrieb von Lampen der Befeuerungsanlage steuern und über Lampentransformatoren an einen Serienstromkreis der Befeuerungsanlage angeschlossen sind, und mit einem Befeuerungsleitsystem, an das die Einzellampensteuermodule angeschlossen sind. Um beim Datenverkehr zwischen dem Befeuerungsleitsystem und den Einzellampensteuermodulen eine möglichst optimale Datenkopplung bei möglichst geringer Signaldämpfung zu erreichen, wird eine separate Datenverbindung vorgeschlagen, mittels der die Einzellampensteuermodule an das Befeuerungsleitsystem angeschlossen sind. Weiterhin weist jedes Einzellampensteuermodul einen Leistungskanal auf, der eingangsseitig über einen FAA-Stecker an den Lampentransformator und ausgangsseitig über einen FAA-Stecker an die Lampe angeschlossen ist. Weiterhin ist im Leistungskanal jedes Einzellampensteuermodul eingangsseitig ein Überspannungsschutzelement zum Serienstromkreis und ausgangsseitig ein Blitzschutzelement zur Lampe angeordnet. Weiterhin weist jedes Einzellampensteuermodul im Steuerkanal ein Signalerfassungselement auf, mittels dem der Lampenzustand, insbesondere der Lampenstrom erfassbar ist. Schließlich weist jedes Einzellampensteuermodul im Steuerkanal einen Mikrocontroller auf, mittels dem der Leistungsteil des Leistungskanals ansteuerbar und Meldungs- und Messwertdaten vom Signalerfassungselement aufbereitbar sind. Der Mikrocontroller des Steuerkanals steuert den Leistungsteil des Leistungskanals so an, dass ein Einschalten und Ausschalten der Lampe über eine Schaltrampe erfolgt und der Lampenzustand ist mittels des Mikrocontrollers des Steuerkanals nach einem Zuschalten des Serienstromkreises bis zum Empfang des ersten Telegramms und bei einem Ausfall eines LWL-Busses in Abhängigkeit von einer eingestellten Parametrierung des Einzellampensteuermoduls steuerbar. In einer solchen Einzellampensteuerung wird der Betriebszustand des Leuchtmittels permanent erfasst und überwacht. Im Falle eines Leuchtmittelausfalls merkt sich der Mikrocontroller dies und schlisst dann den Lampentransformator kurz. Damit sind gefährlich hohe Spitzen eliminiert. Dies Verfahren setzt jedoch einen Kommunikationskanal voraus, über welchen der Mikrocontroller den Leuchtmittelausfall melden kann.

Weiterhin sind Anordnung und Anzeige zur Ortsbestimmung defekter Lampen in Flugplatzbefeuerungsanlagen bekannt, ohne dass neben den der Lampenversorgung dienenden Leitungen zusätzliche Meldeleitungen erforderlich sind. Beispielsweise ist aus der DE 36 35 682 C2 eine Überwachungseinrichtung für den Lampenausfall, insbesondere von Flugplatzbefeuerungsanlagen bekannt, bei der die Lampen über Serienkreistransformatoren gespeist werden, deren Primärwicklungen in Reihe über ein Serienkreiskabel an einen Versorgungskreis angeschaltet sind und in deren Sekundärwicklungskreisen die Lampen liegen. Dabei ist jeder Lampe eine Funktionsschaltung zur Feststellung der Lampenfunktion und dieser nachgeordnet eine Meldeschaltung für einen Lampenausfall zugeordnet. Im Einzelnen enthält die Meldeschaltung einen Oszillator, der für die Lampenposition und/oder Lampenfunktion charakteristische Wechselspannungssignale über das Serienkreiskabel in den Versorgungskreis einspeist, die durch einen Decoder in einer Zentrale auswertbar sind. Ferner weist die Funktionsschaltung eine Einrichtung zur Messung des Lampenstromes, eine Einrichtung zur Messung der über der Lampe abfallenden Spannung und einen lichtempfindlichen Sensor zur Registrierung der Lampenhelligkeit auf. Der Funktionsschaltung ist ein Relais nachgeordnet, dessen Arbeitskontakte im Lampenstromkreis liegen. Wird durch die Funktionsschaltung eine Störung im Lampenkreis festgestellt, so gibt diese ein Steuersignal an das Relais ab, und dieses trennt die fehlerhafte Lampe von der Versorgungsspannung ab.

In Weiterbildung hierzu ist aus der DE 41 43 097 C3 eine Anordnung und Anzeige zur Ortsbestimmung defekter Lampen in Flugplatzbefeuerungsanlagen mit digitalem Lampen-"Intakt"-Signal bekannt, bei der die Primärwicklungen von Serien-Stromwandler in Reihe in einem Versorgungs-Stromkreis und in den Sekundärkreisen der Serien-Stromwandler die Lampen liegen. Damit auch für eine große Lampenzahl hinreichend störsicher die Ortung einer ausgefallenen Lampe ermöglicht wird, ohne dass neben den der Lampenversorgung dienenden Leitungen zusätzliche Meldeleitungen erforderlich sind, ist jeder Lampe eines Befeuerungskreises eine steckbare Einrichtung zugeordnet, die infolge eines vordefinierten Signales im Versorgungsstromkreis bei intakter Lampe ein für die jeweilige Lampe charakteristisches Digitalsignal, das heißt eine für die jeweilige Lampe charakteristische Aufeinanderfolge von logischen Pegeln in den Versorgungsstromkreis einspeist. Das Digitalsignal wird durch eine zentrale Messeinrichtung erfasst und durch Vergleich der erhaltenen "Intakt"-Signale mit gespeicherten Daten eines flughafenspezifischen Rechners wird die genaue Lage der nicht gemeldeten und damit defekten Lampe ermittelt. Dies ermöglicht die Feststellung der Lampenfunktion und die Abfrage von Messwertüber- bzw. - unterschreitungen einer beliebigen Lampe von einer Zentrale aus, ohne dass zusätzliche Steuer- bzw. Meldeleitungen erforderlich wären. Als Lampenfunktion kommen insbesondere Störungen wie Wendelbruch, Leitungsbruch, Kurzschluss oder Erdschluss in Betracht. Die Messwertüberwachung kann u. a. das Signal eines externen Temperatursensors betreffen, der die Landebahntemperatur auf Frostgefahr überwacht. Zur Feststellung eines Wendel- oder Leitungsbruches weist die Funktionsschaltung der Überwachungseinrichtung eine Einrichtung zur Messung des Lampenstromes auf. Beispielsweise kann in den Lampenstromkreis ein Stromwandler angeordnet werden, dessen Sekundärwicklungsenden an einen Fensterkomparator angeschlossen sind. Der Fensterkomparator ermittelt, ob der Leitungsstrom innerhalb vorgegebener Grenzen liegt und gibt die Information an die Meldeschaltung weiter. Weiterhin wird zur Feststellung eines Lampenfassungsschlusses, sowie eines Leitungs- oder Erdschlusses der Spannungsabfall über der Lampe einem Fensterkomparator zugeführt, welcher feststellt, ob die Lampenspannung innerhalb vorgebbarer Grenzen liegt und die entsprechende Information an die Meldeschaltung abgibt. Schließlich ist die Funktionsschaltung mit einer Überspannungsschutzeinrichtung verbunden, die verhindert, dass an den Lampenkontakten berührungsgefährliche Spannungen auftreten. Dadurch wird bei einem Wendel- oder Leitungsbruch eine unzulässige Isolationsbeanspruchung des Stromwandlers sowie eine Gefährdung des Bedienpersonals beim Austausch der Lampe vermieden. Die steckbare Einrichtung wird durch die sekundärseitige Spannung des Stromwandlers gespeist. Da das Digitalsignal auch bei ausgedehnten Kreisen in Überlagerung des Betriebsstromes detektiert werden kann, ist es nicht erforderlich, den Primärstromkreis während der Signalabgabe der den einzelnen Lampen zugeordneten steckbaren Einrichtungen abzuschalten.

Schließlich ist aus der WO 2013/170 894 A1 eine Lampen-Emulationsschaltung für wechselstromgespeiste Flughafenbefeuerungsanlagen zur Nachbildung (Emulierung) des Ausfallens einer LED-Lampe bekannt. Im Einzelnen ist die Lampen-Emulationsschaltung zwischen einem Lampentransformator und der LED-Lampenschaltung eingesetzt. Der Lampentransformator ist mit seiner Primärwicklung mit einer Konstantstromversorgung in Reihe geschaltet und liefert an seiner Sekundärwicklung einen Lampenstrom. Ferner weist die Lampen-Emulationsschaltung Mittel zum Messen der Spannung an der Sekundärwicklung des Lampentransformators und weitere Mittel zum Abschalten der LED-Lampenschaltung von dem Lampentransformator auf, wenn die Spannung an der Sekundärwicklung des Lampentransformators einen vorbestimmten Wert überschreitet. Insbesondere weist die Lampen-Emulationsschaltung einen Gleichrichter auf, der mit einem Filter verbunden ist, um die Spannung über dem Lampentransformator zu bestimmen. Dieser ist ferner mit einer Relaisspule verbunden, die einen Kontakt zum Trennen der LED-Lampenschaltung vom Lampentransformator öffnet, wenn die Spannung über dem Lampentransformator einen vorbestimmten Wert überschreitet. Durch vollständiges Trennen des LED-Lampenschaltkreises vom Lampentransformator wird eine ausgefallene Lampe emuliert (nachgebildet). Wenn der LED-Lampenstromkreis vom Lampentransformator getrennt ist, hat der Lampentransformator an seiner Sekundärseite keine Last und geht so in die Sättigung, wie er es bei einer ausgeschalteten Lampe ausführen würde. Daher detektieren Lampenfehlererfassungsmittel, wie sie aus dem Stand der Technik bekannt sind, zuverlässig einen Ausfall. In einer Ausführungsform ist ein Rückstellschalter parallel zur Sekundärwicklung des Lampentransformators geschaltet. Vorzugsweise ist es ein federbelasteter, normalerweise offener Schalter, der manuell betätigt werden kann, um seinen Kontakt zu schließen und somit einen Kurzschluss der Sekundärwicklung des Lampentransformators zu verursachen. Dies führt zu einem Rücksetzen der Lampen-Emulationsschaltung.

Wie die vorstehende Würdigung des Standes der Technik aufzeigt, sind unterschiedlich ausgestaltete Lösungen zur Ortsbestimmung defekter Lampen in Flugplatzbefeuerungsanlagen mit oder ohne zusätzliche Steuer- bzw. Meldeleitungen bekannt. Bei Einzellampensteuerung erkennt die Steuerung vor Ort die ausgefallene Lampe an den hohen Spannungsspitzen und schließt die Lampe sofort kurz. Sie merkt sich, dass die Lampe ausgefallen ist und meldet dies über den Kommunikationskanal der übergeordneten Steuerung. Damit sind der Ort und die Menge aller Lampen bekannt.

Jedoch fehlt in der Praxis in Anlagen, welche keine Einzellampensteuerung besitzen (das sind die meisten Flughäfen), und die auch keine Cutouts einsetzen wollen (sonst würden sie nicht mehr erkennen, wie viele Lampen ausgefallen sind) eine Möglichkeit, den Austausch der Lampe in einer sicheren Umgebung durchzuführen und dabei die Forderung nach SELV zu erfüllen.

Aus der JP H11 185978 A ist ein Beleuchtungssystem auf einem Flughafen mit einer Konstantstrom-Versorgungseinheit, einer Vielzahl von Leuchten oder Lampentransformatoren, wobei die Leuchten auf der Sekundärseite der Lampentransformatoren angeschlossen sind, die in Serie miteinander über eine Busleitung verbunden sind, und mit Kurzschlussschaltern bekannt, welche die Busleitung an beiden Seiten der Leuchten oder die Zuleitung zur auf der Sekundärseite angeordneten Leuchte öffnen oder kurzschließen. Die Kurzschlussschalter sind normalerweise/im Betrieb geöffnet und sind zum Zeitpunkt der Wartung und Inspektion geschlossen. Hierzu weist das Leuchtengehäuse einen Mikroschalter auf, welcher in Wirkverbindung mit dem Kurzschlussschalter steht und beim Öffnen des Leuchtengehäuses, insbesondere eines Gehäusedeckels, durch das Servicepersonal vor Ort den Kurzschlussschalter manuell betätigen.

Der Erfindung liegt die Aufgabe zugrunde, ein Verfahren und eine Anordnung zum Schutz von Personen vor gefährlicher Berührspannung in Serienstromkreisen mit Serienkreistransformatoren derart auszugestalten, dass die elektrische Sicherheit des Servicepersonals sicherstellt ist und dabei keinen Einfluss auf die Funktionen bestehender Installationen hat, insbesondere die der automatischen Lampenausfallerkennung. Die Erfindung soll auch ohne eine Kommunikationseinrichtung sicher funktionieren.

Diese Aufgabe wird, gemäß kennzeichnendem Teil des Patentanspruch 1, dadurch gelöst, dass
b) jeder elektrische Kontakt zu einer Reparatur vor Ort durch das Bedienpersonal manuell betätigt werden kann, und
c) jede Schutzschaltung eine Mess- und Anzeigeeinrichtung aufweist, welche dazu eingerichtet ist, durch eine Strom- und/oder Spannungsmessung ein Schließen und ein Öffnen des zugehörigen elektrischen Kontakts zu erkennen und anzuzeigen.

Weiterhin wird diese Aufgabe, gemäß kennzeichnendem Teil des Patentanspruchs 11, dadurch gelöst, dass das Verfahren folgende Schritte aufweist:
a) manuelles Schließen eines elektrischen Kontakts der Anordnung zum Überbrücken eines zugehörigen Lampentransformators zu einer Reparatur vor Ort, wobei das Schließen des elektrischen Kontakts mittels der Mess- und Anzeigeeinrichtung erkannt und dem Bedienpersonal angezeigt wird;
b) reparieren des zugehörigen Leuchtmittels direkt unter Spannung im Serienstromkreis und ohne weitere Freischaltmaßnahmen; und
c) manuelles Öffnen des elektrischen Kontakts und In-Augenscheinnahme der Wirkung der Reparatur, wobei das Öffnen des elektrischen Kontakts mittels der Mess- und Anzeigeeinrichtung erkannt und dem Bedienpersonal angezeigt wird.

Der elektrische Kontakt wird entgegen der bekannten Ausführungen nicht mehr automatisch bedient, sondern wird vor Ort vom Servicepersonal aktiviert und wieder deaktiviert.

Der Vorteil ist, dass durch den Ausfall eines Leuchtmittels die elektrischen Eigenschaften eines leerlaufenden Lampentransformators nicht mehr automatisch beeinflusst werden und eine im Hintergrund arbeitende

Lampenausfallüberwachung ihre Aufgabe ungestört weiterführen kann. Sobald ein Service für dieses Leuchtmittel geplant ist und alle Arbeiten dafür vorbereitet sind, wird der elektrische Kontakt aktiviert, was die bis dahin aufgetretenen hohen, für das Personal gefährlichen Spannungsspitzen, wirkungsvoll eliminiert.

Nach dem Service öffnet das Personal den Kontakt wieder und kann sofort die Wirkung der Reparatur in Augenschein nehmen.

In Weiterbildung der Erfindung ist, gemäß Patentanspruch 5, der elektrische Kontakt als Reed Relais ausgestaltet, welches durch ein vom Bedienpersonal von außen zugeführtes Magnetfeld eines Magneten, aktiviert werden kann.

Diese Weiterbildung der Erfindung weist den Vorteil auf, dass die gesamte Anordnung als vollvergossener oder vollvulkanisierten Einschub ausgestaltet werden kann und damit in die Lampen integriert werden kann. Ein Magnetfeld kann nämlich die Schutzhülle oder den typischerweise aus Aluminium bestehenden Hals des Feuers ungehindert durchdringen und den Reed-Kontakt aktivieren.

Weitere Vorteile und Einzelheiten lassen sich der nachfolgenden Beschreibung von bevorzugten Ausführungsformen der Erfindung unter Bezugnahme auf die Zeichnungen entnehmen. In der Zeichnung zeigt:
- FIG. 1a: eine erste Anordnung zur Begrenzung hoher Spannungsspitzen durch Aktivieren eines elektrischen Kontakts gemäß der Erfindung und
- FIG. 1b: eine erweiterte Anordnung der FIG. 1a, welche sowohl den Zustand der gefährlich hohen Spannungsspitzen als auch den sicheren Zustand des kurzgeschlossenen Lampentransformators anzeigt,
- FIG. 2: das Prinzipschaltbild eines Serienstromkreises nach dem Stand der Technik, wie dieser z.B. in Anlagen der Flugfeldbefeuerung eingesetzt wird,
- FIG. 3a: den zeitlichen Verlauf von Spannung und Strom im Serienstromkreis bei Phasenanschnitt und
- FIG. 3b: die Änderung der Kurvenform des Stroms im Serienkreis nach dem Ausfall einer oder mehrerer Leuchtmittel,
- FIG. 4: eine mögliche nicht erfindungsgemäße Anordnung zur automatischen Eliminierung von hohen Spannungsspitzen durch selektive Belastung der Lampentransformator mit Strom und
- FIG. 5: eine mögliche nicht erfindungsgemäße Anordnung zur automatischen Eliminierung von hohen Spannungsspitzen durch selektives Kurzschließen des Lampentransformators.

FIG. 1a zeigt eine erste Anordnung zur Begrenzung hoher Spannungsspitzen durch Aktivieren eines elektrischen Kontakts gemäß der Erfindung. Dabei ist in den zu jedem Leuchtmittel 53 führenden sekundären Stromkreis 58 eine Schutzschaltung S zwischengeschaltet, welche mindestens einen elektrischen Kontakt 54 zum Überbrücken des Lampentrafos 51 aufweist, und zur Behebung von Betriebsstörungen ist der elektrische Kontakt 54 vor Ort durch das Bedienpersonal manuell betätigbar. Insbesondere weist das erfindungsgemäße Verfahren den Vorteil auf, dass ohne weitere Freischaltmaßnahmen direkt unter Spannung die Reparatur erfolgen kann und dass nach der Reparatur das Bedienpersonal den elektrische Kontakt 54 wieder manuell öffnet und die Wirkung der Reparatur in Augenschein nehmen kann.

Bei der in FIG. 1b dargestellten, erweiterten Anordnung der FIG. 1a, weist die Schutzschaltung S eine Spannungs-Mess- und Anzeigeeinrichtung MAU und / oder eine Strom-Mess- und Anzeigeeinrichtung MAI auf. Die jeweiligen Anzeigeeinrichtungen (typischerweise LEDs) werden vorzugsweise mittels Lichtleiterstäben an die Außenseite der Schutzeinrichtung geführt, so dass das Servicepersonal den aktuellen Betriebszustand der Anordnung jeder Zeit in Augenschein nehmen kann.

Im Einzelnen ist die parallel zum elektrischen Kontakt 54 angeordnete Spannungs-Mess- und Anzeigeeinrichtung MAU in Form einer bidirektionaler Stromquelle 57, einer bidirektionaler Zenerdiode 59 als Ansprechschwelle und zweier in Serie geschalteter antiparallel verbundener Leuchtdioden 50 ausgestaltet.

Wenn das Personal den vorstehend beschriebenen Magneten in Position gebracht und den elektrischen Kontakt 54 betätigt hat, fließt jetzt der normale Serienstrom durch den elektrischen Kontakt 54 und die hohen Spannungsspitzen sind eliminiert. Zur Anzeige hierfür ist die in Reihe zum elektrischen Kontakt 54 liegende Strom- Mess- und Anzeigeeinrichtung MAI vorgesehen, welche das Kurzschließen durch den elektrischen Kontakt 54, mittels eines Strommesstransformators 56 und zweier antiparallel geschalteter Bürden-LEDs 55 anzeigt. Diese LEDs 55 leuchten so lange, solange der elektrische Kontakt 54 geschlossen ist und somit der Lampentransformatoren 51 wirkungsvoll kurzgeschlossen ist und damit hohe Spannungsspitzen prinzipiell ausgeschlossen sind. Nach den Servicearbeiten kann die in der obigen beschriebenen Ausführungsgestaltung erwähnte Magnetmanschette entfernt werden und damit die erfolgreiche Reparatur sofort kontrolliert werden.

Die vorstehenden Anzeigen MAU und MAI können auch in Kombination miteinander vorgesehen werden, wobei die Sicherheit der Anzeige weiter erhöht ist. Zur Erhöhung der Sicherheit kann auf vorteilhafte Art und Weise zum einen der gefährliche Zustand (es treten hohe Spannungsspitzen auf) als auch der sicheren Zustand (es gibt keine hohen Spannungsspitzen mehr und der Strom fließt jetzt durch den hergestellten Überbrückungskurzschluss) jeweils anzeigt werden.

In einer bevorzugten Ausgestaltung ist der elektrische Kontakt 54 als Reed-Relais ausgestaltet, welches durch einen vom Bedienpersonal von außen zugeführten Magnet aktivierbar ist. Die Ausgestaltung als Reed-Relais ermöglicht eine weitere besonders vorteilhafte Ausgestaltung der gesamten Anordnung in Form eines vollvergossenen oder vollvulkanisierten Einschubs, der unter anderem in den Hals eines Feuers eingelassen werden kann und somit von den klimatischen Einwirkungen geschützt ist. Ein Magnetfeld, insbesondere das eines magnetischen Stabs, kann den aus typischerweise Aluminium bestehenden Hals des Feuers ungehindert durchdringen und den Reed-Kontakt 54 aktivieren.

Eine mögliche Ausgestaltung des Magneten besteht darin, dass der Magnet in ein Klettband eingearbeitet ist. Das Klettband wird zum Aktivieren des Schalters/elektrischer Kontakt 54 einfach um den Hals des Feuers gelegt und fixiert.

Zur besseren optischen Unterscheidung sind die LEDs der Spannungs-Mess- und Anzeigeeinrichtung MAU für die Spannungsspitzen in rot als Indikation einer Gefahr und die LEDs zur Anzeige des Kurzschlussstromes der Strom-Mess- und Anzeigeeinrichtung MAI in grün als Indikation eines sicheren Zustands ausgeführt.

Zur Verbesserung des Performance Levels könnte man die Anzeigen MAU und MAI jeweils doppelt unabhängig voneinander ausführen. Wenn das Personal jetzt immer darauf achtet, dass der aktuelle Zustand des Systems immer doppelt angezeigt wird und dabei von beiden Systemen niemals eine Diskrepanz angezeigt wird, ist es besonders sicher von den gefährlich hohen Spannungsspitzen geschützt.

Die Erfindung ist nicht auf die dargestellten und beschriebenen Ausführungsbeispiele beschränkt, sondern umfasst auch alle im Sinne der Erfindung gleichwirkende Ausführungen. Im Rahmen der Erfindung kann die Schutzschaltung S als Modul in einem Gehäuse integriert sein, welches FAA-Steckverbinder nach AC 150/5345 besitzt - je eine Buchse und ein Stecker an jeder Seite - und zu jedem Leuchtmittel 16, 33, 43, 53 führenden Serienkabel 17, 32, 42, 52 zwischengesteckt wird, so dass auf einfache Art und Weise eine Nachrüstung erfolgen kann.

Erfindungsgemäß kann das parallel zu jedem Leuchtmittel angeordnete Sicherheitsmodul/ Schutzschaltung S, vor Ort vom Servicepersonal aktiviert und wieder deaktiviert werden. Während der Reparatur werden die bis dahin aufgetretenen hohen, für das Personal gefährlichen Spannungsspitzen wirkungsvoll eliminiert und nach der Reparatur kann das Servicepersonal sofort die Wirkung der Reparatur in Augenschein nehmen. Dadurch erfüllt das erfindungsgemäße Konzept hohe Sicherheitsansprüche bei niedrigen Herstellungskosten hierfür. Insbesondere werden besondere Anforderungen hinsichtlich Ausfallsicherheit, Verfügbarkeit und Wartungsfreundlichkeit erfüllt und es kann vor Ort ohne weitere Freischaltmaßnahmen direkt unter Spannung, beispielsweise ein Leuchtmittel/Lampenwechsel, eine Reinigung oder ein Test durchgeführt werden.

## Patentansprüche

1. Anordnung zum Schutz von Bedienpersonal vor gefährlicher Berührspannung in einem Serienstromkreis,
wobei der Serienstromkreis einen zentral angeordneten Konstantstromregler (11, 12, 13, 14) und mehrere jeweils auf ihrer Primärseite durch Serienkabel (17, 32, 42, 52) in Reihe geschaltete Lampentransformatoren (15, 31, 41, 51) aufweist,
wobei der Konstantstromregler (11, 12, 13, 14) einen Serienkreistransformator (12) aufweist, an dessen Sekundärseite die Lampentransformatoren (15, 31, 41, 51) angeschlossen sind, und
wobei auf der jeweiligen Sekundärseite jedes Lampentransformators (15, 31, 41, 51) ein Leuchtmittel (16, 33, 43, 53) angeschlossen ist,
wobei die Anordnung aufweist:
a) eine oder mehrere Schutzschaltungen (S), welche je zwischen der Sekundärseite eines Lampentransformators (15, 31, 41, 51) und dem zugehörigen Leuchtmittel (16, 33, 43, 53) angeschlossen sind, wobei jede Schutzschaltung (S) einen schließ- und öffenbaren elektrischen Kontakt (54) zur Überbrückung des Lampentransformators (15, 31, 41, 51) durch Kurzschließen aufweist,
**dadurch gekennzeichnet, dass**
b) jeder elektrische Kontakt (54) zu einer Reparatur vor Ort durch das Bedienpersonal manuell betätigt werden kann, und
c) jede Schutzschaltung (S) weiter eine Mess- und Anzeigeeinrichtung (MAI, MAU) aufweist, welche dazu eingerichtet ist, durch eine Strom- und/oder Spannungsmessung ein Schließen und ein Öffnen des zugehörigen elektrischen Kontakts zu erkennen und anzuzeigen.

2. Anordnung nach Anspruch 1, **dadurch gekennzeichnet, dass** die Schutzschaltung (S) als Mess- und Anzeigeeinrichtung eine Strom- Mess- und Anzeigeeinrichtung (MAI) und eine Spannungs-Mess- und Anzeigeeinrichtung (MAU) aufweist.

3. Anordnung nach Anspruch 2, **dadurch gekennzeichnet, dass** die Spannungs-Mess- und Anzeigeeinrichtung (MAU) parallel zum elektrischen Kontakt (54) angeordnet ist und in Form einer bidirektionaler Stromquelle (57), einer bidirektionalen Zenerdiode (59) als Ansprechschwelle und zweier in Serie geschalteter antiparallel verbundener Leuchtdioden (50) ausgestaltet ist, welche bei geschlossenem elektrischen Kontakt (54) und Auftreten hoher Spannungsspitzen leuchten.

4. Anordnung nach Anspruch 3, **dadurch gekennzeichnet, dass** die Strom- Mess- und Anzeigeeinrichtung (MAI) das Kurzschließen durch den elektrischen Kontakt (54) anzeigt, in Reihe zum elektrischen Kontakt (54) liegt und einen Strommesstransformator (56) und zwei antiparallel geschaltete Bürden-LEDs (55) aufweist, welche so lange leuchten, wie der elektrische Kontakt (54) geschlossen ist.

5. Anordnung nach einem der Ansprüche 2 bis 4, **dadurch gekennzeichnet, dass** der elektrische Kontakt (54) ein Reed-Relais aufweist, welches durch ein vom Bedienpersonal von außen zugeführtes Magnetfeld eines Magneten aktiviert werden kann.

6. Anordnung nach einem der Ansprüche 2 bis 5, **dadurch gekennzeichnet, dass** die Schutzschaltung (S) komplett vergossen in ein bestehendes Verbindungskabel (58) integriert ist oder in einem mit FAA-Buchse und Stecker ausgestalteten Gehäuse integriert ist.

7. Anordnung nach Anspruch 6, **dadurch gekennzeichnet, dass** die vergossene Schutzschaltung (S) im Leuchtmittel (16, 33, 43, 53) integriert angeordnet ist.

8. Anordnung nach Anspruch 4 oder nach Anspruch 5, falls dieser von Anspruch 4 abhängt, **dadurch gekennzeichnet, dass** die anzeigenden Leuchtdioden (50) für die Spannung sowie die Bürden-LEDs (55) für den kurzgeschlossenen Strommesstransformator der Mess- und Anzeigeeinrichtung (MAI, MAU) doppelt ausgeführt sind, so dass ein Ausfall der Anzeigen vom Bedienpersonal von außen her erkannt werden kann.

9. Anordnung nach Anspruch 4, nach Anspruch 5, falls dieser von Anspruch 4 abhängt, oder nach Anspruch 8, **dadurch gekennzeichnet, dass** die Spannungs-Mess- und Anzeigeeinrichtung (MAU) rote Leuchtdioden (50) für die Anzeige von Spannungsspitzen und die Strom-Mess- und Anzeigeeinrichtung (MAI) grüne Bürden-LEDs (55) für die Anzeige bei geschlossenem elektrischen Kontakt (54) aufweist.

10. Anordnung nach Anspruch 4, nach Anspruch 5, falls dieser von Anspruch 4 abhängt, nach Anspruch 8 oder nach Anspruch 9, **dadurch gekennzeichnet, dass** das Licht der Leuchtdioden (50) und der Bürden-LEDs (55) mittels Lichtleiterstäben an eine Außenseite eines Gehäuses der Schutzschaltung (S) geführt werden kann.

11. Verfahren zum Schutz von Bedienpersonal vor gefährlicher Berührspannung mittels einer Anordnung gemäß Patentanspruch 1 in einem Serienstromkreis gemäß Patentanspruch 1, **dadurch gekennzeichnet, dass** das Verfahren folgende Schritte aufweist:
a) manuelles Schließen eines elektrischen Kontakts (54) der Anordnung zum Überbrücken eines zugehörigen Lampentransformators (15, 31, 41, 51) zu einer Reparatur vor Ort, wobei das Schließen des elektrischen Kontakts (54) mittels der Mess- und Anzeigeeinrichtung (MAI, MAU) erkannt und dem Bedienpersonal angezeigt wird;
b) reparieren des zugehörigen Leuchtmittels (16, 33, 43, 53) direkt unter Spannung im Serienstromkreis und ohne weitere Freischaltmaßnahmen; und
c) manuelles Öffnen des elektrischen Kontakts (54) und In-Augenscheinnahme der Wirkung der Reparatur, wobei das Öffnen des elektrischen Kontakts (54) mittels der Mess- und Anzeigeeinrichtung (MAI, MAU) erkannt und dem Bedienpersonal angezeigt wird.

## Claims

1. An arrangement for protecting operating personnel from dangerous contact voltage in a series circuit, wherein the series circuit has a centrally arranged constant-current regulator (11, 12, 13, 14) and a plurality of lamp transformers (15, 31, 41, 51) connected in series on their primary side by series cables (17, 32, 42, 52), wherein the constant-current regulator (11, 12, 13, 14) has a series circuit transformer (12), to the secondary side of which the lamp transformers (15, 31, 41, 51) are connected, and wherein a lighting means (16, 33, 43, 53) is connected to the respective secondary side of each lamp transformer (15, 31, 41, 51), wherein the arrangement comprises:
a) one or more protective circuits (S), which are each connected between the secondary side of a lamp transformer (15, 31, 41, 51) and the associated lighting means (16, 33, 43, 53), wherein each protective circuit (S) has a closing and openable electrical contact (54) for bridging the lamp transformer (15, 31, 41, 51) by short-circuiting,
**characterized in that**
b) each electrical contact (54) can be manually actuated for repair in situ by the operating personnel, and
c) each protective circuit (S) further comprises a measurement and display device (MAI, MAU), which is designed to detect and display a closing and an opening of the associated electrical contact by means of a current and/or voltage measurement.

2. Arrangement according to claim 1, **characterized in that** the protective circuit (S) has as measurement and display device a current, measuring and display device (MAI) and a voltage-, measurement- and display device (MAU).

3. Arrangement according to Claim 2, **characterized in that** the voltage-, measurement- and display device (MAU) is arranged parallel to the electrical contact (54) and is designed in the form of a bidirectional current source (57), a bidirectional Zener diode (59) as response threshold and two series-connected antiparallel-connected light-emitting diodes (50), which illuminate when the electrical contact (54) is closed and high voltage peaks occur.

4. Arrangement according to claim 3, **characterized in that** the current-, measurement- and display device (MAI) indicates the short-circuiting through the electrical contact (54), lies in series with the electrical contact (54), and has a current measurement transformer (56) and two load-LEDs (55) connected in antiparallel, which illuminate as long as the electrical contact (54) is closed.

5. Arrangement according to one of claims 2 to 4, **characterized in that** the electrical contact (54) has a reed relay, which can be activated by a magnetic field of a magnet supplied from outside by the operating personnel.

6. Arrangement according to one of claims 2 to 5, **characterized in that** the protective circuit (S) is completely encapsulated in an existing connecting cable or is integrated in a housing which is designed with a FAA socket and plug.

7. Arrangement according to claim 6, **characterized in that** the overcast protective circuit (S) is arranged in an integrated manner in the lighting means (16, 33, 43, 53).

8. Arrangement according to claim 4 or according to claim 5, if this depends on claim 4, **characterized in that** the indicating light-emitting diodes (50) for the voltage and the load-LEDs (55) for the short-circuited current measuring transformer of the measuring and display device (MAI, MAU) are of double design, so that a failure of the displays can be detected from the outside by the operating personnel.

9. Arrangement according to claim 4, according to claim 5, if this depends on claim 4, or according to claim 8, **characterized in that** the voltage-, measurement- and display device (MAU) has red light-emitting diodes (50) for the display of voltage peaks and the current-, measurement- and display device (MAI) has green load- LEDs (55) for the display if the electrical contact (54) is closed.

10. Arrangement according to claim 4, according to claim 5, if this depends on claim 4, according to Claim 8 or according to Claim 9, **characterized in that** the light of the light-emitting diodes (50) and of the load-LEDs (55) can be guided by means of optical conductor bars to an outer side of a housing of the protective circuit (S).

11. A method for protecting operating personnel from dangerous contact voltage by means of an arrangement according to patent claim 1 in a series circuit according to patent claim 1, **characterized in that** the method has the following steps:
a) manually closing an electrical contact (54) of the arrangement for bridging an associated lamp transformer (15, 31, 41, 51) for repair in situ, wherein the closing of the electrical contact (54) is detected by means of the measurement- and display device (MAI, MAU) and is displayed to the operating personnel;
b) repairing the associated lighting means (16, 33, 43, 53) directly under voltage in the series circuit and without further release measures; and
c) manual opening of the electrical contact (54) and in-eye dummy of the effect of the repair, wherein the opening of the electrical contact (54) is detected by means of the measurement- and display device (MAI, MAU) and displayed to the operating personnel.

## Revendications

1. Un agencement pour protéger le personnel de service contre une tension de contact dangereuse dans un circuit en série, le circuit en série ayant un régulateur de courant constant disposé au centre (11, 12, 13, 14) et une pluralité de transformateurs de lampe (15, 31, 41, 51) connectés en série sur leur côté primaire par des câbles en série (17, 32, 42, 52), le régulateur de courant constant (11, 12, 13, 14) ayant un transformateur de circuit en série (12), sur le côté secondaire duquel les transformateurs de lampe (15, 31, 41, 51) sont connectés, et un moyen d'éclairage (16, 33, 43, 53) étant connecté au côté secondaire respectif de chaque transformateur de lampe (15, 31, 41, 51), l'agencement comprenant:
a) un ou plusieurs circuits de protection (S), qui sont chacun connectés entre le côté secondaire d'un transformateur de lampe (15, 31, 41, 51) et les moyens d'éclairage associés (16, 33, 43, 53), chaque circuit de protection (S) ayant un contact électrique de fermeture et d'ouverture (54) pour ponter le transformateur de lampe (15, 31, 41, 51) par court-circuitage,
**caractérisé en ce que**
b) chaque contact électrique (54) peut être actionné manuellement pour la réparation in situ par le personnel de fonctionnement, et
c) chaque circuit de protection (S) comprend en outre un dispositif de mesure et d'affichage (MAI, MAU) qui est conçu pour détecter et afficher une fermeture et une ouverture du contact électrique associé au moyen d'une mesure de courant et/ou de tension.

2. L'agencement selon la revendication 1, **caractérisé en ce que** le circuit de protection (S) comporte comme dispositif de mesure et d'affichage un dispositif de mesure et d'affichage de courant, de mesure et d'affichage (MAI) et un dispositif de mesure et d'affichage de tension, de mesure et d'affichage (MAU).

3. L'agencement selon la revendication 2, **caractérisé en ce que** le dispositif de mesure de tension, de mesure et d'affichage (MAU) est disposé parallèlement au contact électrique (54) et est réalisé sous la forme d'une source de courant bidirectionnel (57), d'une diode Zener bidirectionnelle (59) en tant que seuil de réponse et de deux diodes électroluminescentes (50) montées en série et montées en antiparallèle, qui éclairent lorsque le contact électrique (54) est fermé et des pics de haute tension se produisent.

4. L'agencement selon la revendication 3, **caractérisé en ce que** le dispositif de mesure de courant, de mesure et d'affichage (MAI) indique le court-circuit à travers le contact électrique (54), se trouve en série avec le contact électrique (54), et comporte un transformateur de mesure de courant (56) et deux LED de charge (55) connectées en antiparallèle, qui éclairent tant que le contact électrique (54) est fermé.

5. L'agencement selon l'une des revendications 2 à 4, **caractérisée en ce que** le contact électrique (54) comporte un relais Reed, qui peut être activé par un champ magnétique d'un aimant alimenté depuis l'extérieur par le personnel de service.

6. L'agencement selon l'une des revendications 2 à 5, **caractérisé en ce que** le circuit de protection (S) est complètement encapsulé dans un câble de connexion existant ou est intégré dans un boîtier qui est conçu avec une douille et un bouchon FAA.

7. L'agencement selon la revendication 6, **caractérisé en ce que** le circuit de protection (S) est disposé de manière intégrée dans les moyens d'éclairage (16, 33, 43, 53).

8. L'agencement selon la revendication 4 ou selon la revendication 5, si cela dépend de la revendication 4, **caractérisé en ce que** les diodes électroluminescentes (50) indicatrices pour la tension et les LED de charge (55) pour le transformateur de mesure de courant en court-circuit du dispositif de mesure et d'affichage (MAI, MAU) sont de conception double, de sorte qu'une défaillance des affichages peut être détectée depuis l'extérieur par le personnel de service.

9. L'agencement selon la revendication 4, selon la revendication 5, si cela dépend de la revendication 4, ou selon la revendication 8, **caractérisé en ce que** le dispositif de mesure de tension, de mesure et d'affichage (MAU) comporte des diodes électroluminescentes rouges (50) pour l'affichage de pics de tension et le dispositif de mesure et d'affichage de courant (MAI) comporte des diodes électroluminescentes vertes (55) pour l'affichage si le contact électrique (54) est fermé.

10. L'agencement selon la revendication 4, selon la revendication 5, si cela dépend de la revendication 4, selon la revendication 8 ou selon la revendication 9, **caractérisé en ce que** la lumière des diodes électroluminescentes (50) et des LED de charge (55) peut être guidée au moyen de barres conductrices optiques sur un côté extérieur d'un boîtier du circuit de protection (S).

11. Un procédé de protection du personnel de service contre une tension de contact dangereuse au moyen d'un agencement selon la revendication 1 de brevet dans un circuit en série selon la revendication 1, **caractérisé en ce que** le procédé comprend les étapes suivantes :
a) la fermeture manuelle d'un contact électrique (54) de l'agencement pour ponter un transformateur de lampe associé (15, 31, 41, 51) pour la réparation in situ, **en ce que** la fermeture du contact électrique (54) étant détectée au moyen du dispositif de mesure et d'affichage (MAI, MAU) et étant affichée au personnel de service;
b) réparer les moyens d'éclairage associés (16, 33, 43, 53) directement sous tension dans le circuit série et sans autres mesures de libération; et
c) ouverture manuelle du contact électrique (54) et faux-oeil de l'effet de la réparation, **en ce que** l'ouverture du contact électrique (54) étant détectée au moyen du dispositif de mesure et d'affichage (MAI, MAU) et affichée au personnel de service.
